# EUROPEAN PATENT SPECIFICATION

(11) **EP 1 443 717 B1**
(45) Date of publication and mention of the grant of the patent: **21.12.2005**
(21) Application number: 03290253.8
(22) Date of filing: 03.02.2003
(51) Int. Cl.: H04L 12/56

(54) **Bandwidth broker for a telecommunication system**
Bandbreitenmakler für ein Telekommunikationssystem
Courtier de bande-passante pour un système de télécommunication

(43) Date of publication of application: 04.08.2004
(73) Proprietor: ALCATEL, 75008 Paris (FR)
(72) Inventor: De Clercq, Jeremy, 9000 Gent (BE); De Neve, Hans M.P., 2300 Turnhout (BE); Goderis, Danny J., 1731 Relegem (BE); Büchli, Maarten J.C., 2018 Antwerpen (BE)
(74) Representative: Narmon, Gisèle Marie Thérèse

(56) References cited:
- NEILSON R ET AL: "a discussion of bandwidth broker requirements for Internet2 Qbone Deployment" , August 1999 (1999-08), pages 1-30, XP002244462 Retrieved from the Internet: <URL:www.google.fr> [retrieved on 2003-06-16]

## Description

The invention relates to a telecommunication system comprising a plurality of network domains adapted to transmit data packets through and between such domains. It relates also to a bandwidth broker adapted to allocate bandwidth resources and to control the admission of messages in a network domain.

Nowadays, networks are used to transfer different types of traffic, such as voice, file data (programs), video data, images. Each type of traffic must be handled in a given way. For instance, the voice traffic must be transmitted in real time but a certain degree of errors can be admitted. The transmission of programs is generally not required to be in real time, but no loss of data is admitted. Generally, to each flow is attributed a bandwidth and a quality of service which is expressed by parameters such as a maximum delay time, a maximum bit error rate, etc.

As traffic resources are relatively limited, they must be managed carefully, i.e. for each flow it is necessary to allocate the necessary bandwidth and the necessary quality of service (QoS), but preferably no more.

For the management of traffic resources, it must also be taken into account that data packets have to cross several domains, i.e. several networks having different capabilities and which are generally managed by different operators.

The management of quality of service in this context may use the intServ standard which uses an in-band signalling wherein, to each flow is attributed a quality of service. More generally, signalling messages define which flows need to receive which resources. The flows are described using different parameters; in the data-plane, packets are identified as belonging to a specific flow by examining different fields of the packets; these fields may belong to more than one header. But this technology is very demanding for the network equipments, such as routers, because each network element needs to understand the in-band signalling protocol, and because every network element needs to memorize some per-flow state and needs to treat (police, shape, etc.) packets on a per-flow basis.

In order to avoid this drawback, the diffServ standard may be used. The quality of service is managed through an out-of-band signalling. DiffServ uses a specific field in the IP header to indicate how to treat every individual packet with regard to QoS. In that case, the management is realized through bandwidth brokers, sometimes named also VSN controllers (Virtual Service-aware Network controller).

With the diffServ standard or technology to each flow is attributed a treatment class corresponding to a quality of service (QoS). A treatment class is a parameter which may represent the type of flow, for instance voice, data or e-mail. It requires less data to be transmitted than the detailed parameters necessary for the quality of service. With this kind of information, the routers handle the packets according to the required type of service (treatment class). Generally, in each router, all the packets, which may belong to different flows, corresponding to this type of service are aggregated in a given buffer.

However, the information provided to each router is not sufficient to manage the admission control and the bandwidth. It is the reason why a bandwidth broker is provided at least for each domain. This bandwidth broker allocates an amount of resources inside the domain for each type of service and allocates also resources at network boundaries between two domains.

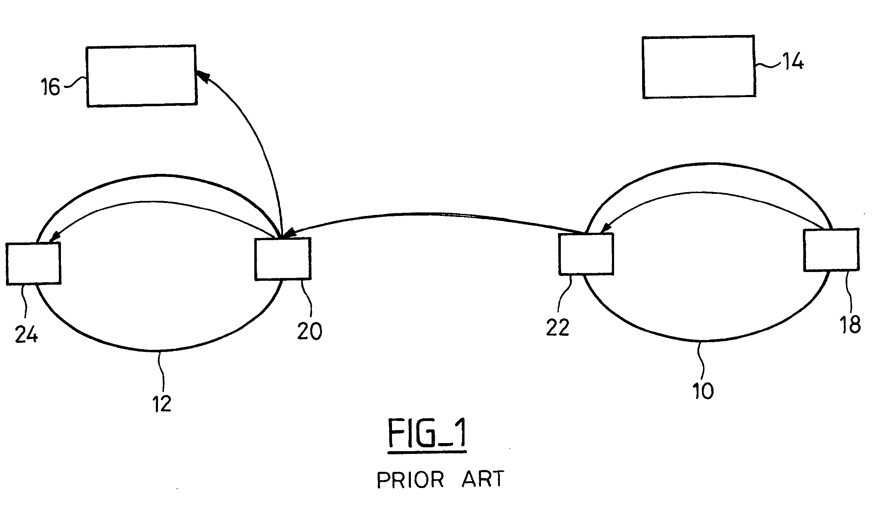

Figure 1 represents a part of telecommunication system of the prior art with two domains 10 and 12 wherein to each domain corresponds a bandwidth broker, respectively 14 and 16.

Data are introduced in each domain by an ingress border router and exit from such domain through an egress border router. On figure 1, the ingress border routers are referenced respectively 18 and 20 and the egress border routers are referenced respectively 22 and 24.

The routers, which are the most complex and expensive devices in networks, determine routes for data. The routes are stored in the form of routing tables in each router. These routing tables are computed in a consistent way for all border routers and are in the format standardized by the BGP protocol (Border Gateway Protocol). The BGP messages are either I-BGP (internal) or E-BGP (external) messages depending on whether they are inside a domain or between domains.

Each bandwidth broker, 14 or 16, needs its own routing tables in order to know with which neighbour bandwidth broker it must exchange signalling information for a specific flow's destination. Of course, the bandwidth broker routing tables must be aligned with the border router routing tables. In fact, when the route followed by data packets is changed, there must be a corresponding change of route for signalling (for resource reservation) between bandwidth brokers.

In order to align the routing tables of the border routers with the routing tables of the bandwidth brokers, each bandwidth broker merely listens to the routing messages exchanged by the underline routers. As shown on figure 1, the bandwidth broker 16 receives messages from the border router 20.

It has been observed that this known technology presents important drawbacks. More particularly, as the routes are only determined by routers using BGP, and as BGP policy rules do not take into account the downstream resource availability, the absence of this criteria may create serious difficulties for the management of resources by the bandwidth broker because the route selected by routers may not provide sufficient resources.

Moreover, when route changes are implemented, the packets of existing flows will follow this new route before the bandwidth brokers have been able to allocate resources on the complete path which corresponds to this new route. This delay may create serious problems, more particularly, for a resource-on-demand operation mode where operators send packets to peering operators after the latters have requested resources for those packets. In fact, the problem is the following:

Existing flows are those that have been admitted through a concatenation of networks. They follow a certain path and they have been granted certain resources and, thus, certain guarantees. If a great number of flows, for instance 10.000, follows a certain path, due to the snooping of BGP messages, the bandwidth broker knows which path is followed, and if a route change is announced using BGP from border router to border router, at the time a certain border router makes the decision to choose the new route over the old route (for any reason that may be node dependent), all the packets of these 10.000 flows will follow the new path to their destination. But the bandwidth brokers have done admission control for these flows on the old path, at flow establishment time, but not on the new path that these packets will follow due to the route change. So these flows will follow a new path, and there is no guarantee at all that this new path will have enough resources to guarantee the quality of service to all of these 10.000 flows.

To summarize: on the one hand, the bandwidth broker will be aware of the new route only after the existing flows have been re-routed (so the bandwidth broker will only be aligned for the acceptance of new flows); and, on the other hand, accepted flows will follow a route on a path over which no admission control has been performed and over which no resources are reserved and no quality of service is guaranteed. The prior art document from the Internet Qbone BB advisory council "A discussion of Bandwidth Broker Requirements for Internet 2 Qbone Deployment" provides guidelines for uniplementation of BB to provide QoS.

In order to overcome these drawbacks, the invention provides a telecommunication system wherein the bandwidth brokers are used for relaying the routing messages between border routers of different domains. In other words, according to the invention, instead of transmitting directly a routing message from a border router to the border router of a neighbour domain, the routing message is transmitted from the first border router to the bandwidth broker associated with this border router, and from this bandwidth broker, to the bandwidth broker associated with the target border router of this neighbour domain to which the message must be transmitted and from this second bandwidth broker, the routing message is transmitted to the second border router.

By relaying the routing messages, the bandwidth brokers receive information about the inter domain routing topology. Therefore, the routing information of the bandwidth brokers can be correctly aligned with the routing information in the network. Moreover, as the bandwidth brokers simply relay route exchange messages, this transmission is transparent for the border routers; consequently, it is not necessary to modify, i.e. upgrade, the complex and expensive border routers.

The invention is consistent with the use of BGP protocol. Information exchanged between border routers of the same domain use the I-BGP protocol and information exchanged between border routers through bandwidth brokers can use the E-BGP protocol.

The bandwidth broker comprises means to copy the routing table of the associated border router, and means to synchronize its routing table with the routing table of the associated border router.

Herewith the bandwidth broker has accurate information about the path in the data plane of the flow for which it receives a bandwidth request. In fact, when a bandwidth broker receives a new bandwidth request, it looks at the origin of the request and at the destination of the corresponding flow for which resources are requested. By looking at its routing table, the bandwidth broker knows what will be the path in the dataplane of this flow.

Moreover, each bandwidth broker has means to delay or to prevent route changes in view of availability of resources controlled by this bandwidth broker, or controlled by bandwidth brokers of peering networks.

Therefore, the bandwidth broker is programmed in such a way that the routing change announcement is delayed until it has allocated resources for existing flows and for new flows on the new route. The bandwidth broker is also be programmed to prevent a route change if it receives information that resources are not available on the new route or, for instance, if the new route would create a congestion. In that case, there may be no route change and the previous route is maintained.

The route messages exchanged between bandwidth brokers are not necessarily according to the Border Gateway Protocol BGP. It is simply necessary that they relay E-BGP.

In brief, the invention relates to a bandwidth broker for a domain of a telecommunication system as defined in claim 1.

It is recalled here that the routing table is used in the control plane and that the forwarding table is used in the data plane.

More precisely, the routing table(s) contain(s) the routing information received from all the routing peers via routing protocols, and the information which needs to be sent to the routing peers. From all this information, the router makes routing or protocol decisions and insert the appropriate forwarding behaviour in the forwarding table.

The forwarding table contains the rules that the actual data packets will follow. Therefore, in the forwarding table, there is only one possible outgoing interface for a specific data packet. The forwarding table is created by creating decision rules or algorithms or policy rules on all the routing information which is maintened in the routing table(s).

More generally, although in the preceeding and in the following description, the term "routing table" is used, it must be understood as meaning generally "routing or forwarding table".

The bandwidth broker may comprise a plurality of inputs/outputs for connection to a plurality of border routers and a plurality of inputs/outputs for connection with other bandwidth brokers in order to be able to relay a plurality of route exchanges.

The bandwidth broker may be associated with a plurality of border routers of the corresponding domain. Alternatively, the bandwidth broker may be associated with a single border router, this bandwidth broker being connected to the other bandwidth brokers of the same domain in order to exchange route exchange messages between said other bandwidth broker(s) and said single border router.

The bandwidth broker may comprise means to obtain information about the route followed from one border router to another border router inside the associated domain by data of specific flows in order to be able to allocate resources to the selected route and/or perform admission control on the selected route and/or in order to identify the next network that the data will reach or go through.

The means for obtaining information about a selected route inside the associated domain may be determined by application of the policy rules of the protocol of route determination inside the domain. Alternatively, means for obtaining information about a selected route inside the associated domain comprise means adapted to analyse the routing exchange information obtained from the border router after said border router has made a route selection.

The exchange of information with the corresponding border router is, for instance, according to the Border Gateway Protocol (BGP).

The invention concerns also a telecommunication system comprising a plurality of bandwidth brokers as defined in claim 8.

In an embodiment, a same domain comprises a plurality of bandwidth brokers, each bandwidth broker of said plurality being associated with a distinct single border router or with a set of border routers of said domain, and all the bandwidth brokers of said plurality being connected to each other in order to exchange routing information from the complete domain and said single border router.

Other features and advantages of the invention will appear with the description of certain of its embodiments, this description being made in connection with the drawings, wherein:
figure 1, already described, represents a prior art telecommunication system,
figure 2 represents a telecommunication system according to the invention,
figure 3 represents another telecommunication system according to the invention,
figure 4 represents one operation of the telecommunication system represented on figure 3,
figure 5 represents still another embodiment of the telecommunication system according to the invention, and
figure 6 represents an example of route exchange messages in a network according to the invention.

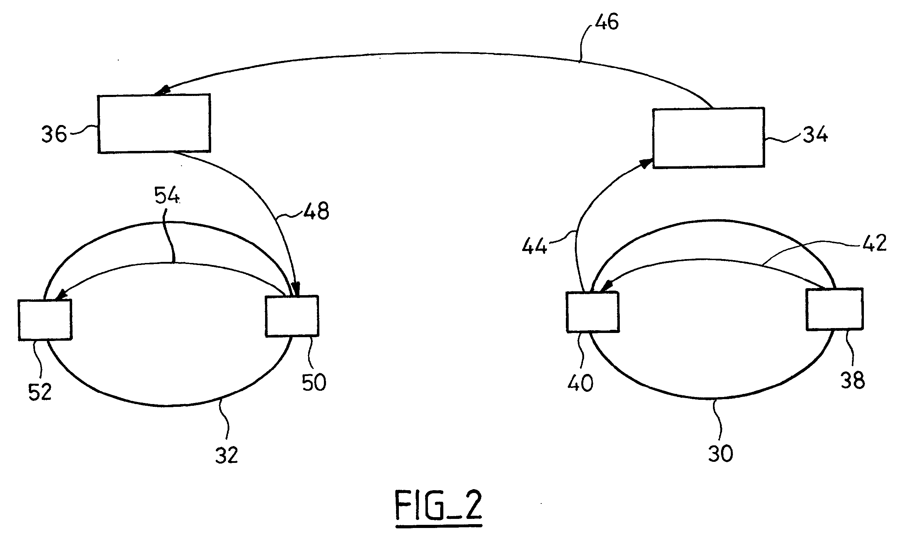

The telecommunication system represented on figure 2 comprises two domains 30 and 32 wherein each domain has an ingress border router and an egress border router. To each domain is associated a bandwidth broker, respectively 34, 36.

On this figure 2, the lines with arrows represent route exchange messages, i.e. signalling messages indicating routes to be followed or requested route changes. In other words, these messages are BGP messages which represent messages by which routers distribute reachability information to each other. These lines are not data or packets to be transmitted.

As shown, a route exchange message 42 using the I-BGP protocol is, as in the prior art, provided between the ingress border router 38 of domain 30 and the egress border router 40 of the same domain. This route exchange message is transmitted, as represented by line 44, to the bandwidth broker 34 associated to domain 30. The route exchange message along line 44 is according to the E-BGP protocol. The route exchange message is transmitted through the line 46 from bandwidth broker 34 to bandwidth broker 36 associated with domain 32. As already indicated, it is not indispensable that messages along line 46 be according to the BGP protocol.

From bandwidth broker 36, the route exchange message is transmitted through line 48, with E-BGP protocol, to the ingress border router 50 of domain 32 and from this border router 50 to the egress border router 52 of said domain 32 through a connexion 54 which is according to the I-BGP protocol.

If the bandwidth broker 34 or 36 detects a route change that will affect existing admitted flows, it is programmed to delay the propagation of this route change until it has (for instance via out-of-band signalling) checked whether enough resources are available on the new path to satisfy the existing flows that will be re-routed according to the received route change. The bandwidth broker may also delay the propagation of the route change until it has allocated enough resources on the complete new path. If there are not enough resources available on the new route, the bandwidth broker could be programmed to prevent the change of route.

Although the bandwidth brokers may communicate between each other indepently from protocol BGP, they must be consistent with the BGP policy rules so that informations stored in the bandwidth broker routing tables are synchronized with the informations contained in the border router routing tables. However, the bandwidth brokers must communicate with the border routers according to BGP.

In another embodiment, in view of synchronizing the bandwidth brokers with the border router decisions, instead of having these bandwidth brokers completely consistent with the BGP policy rules (and emulate the border router decisions), additional "snooping" of BGP messages is implemented. This may be realized by means of a simple (I- or E-)BGP connection between the border router and a process on the bandwidth broker. As such, the border router will send routing changes reflecting its decision to the bandwidth broker as if it were to a peer border router. The expression "snooping" is used here because, in this example, the bandwidth broker is unable to send routing changes or information to the border router by means of this connection, and it is not actively participating in the BGP process.

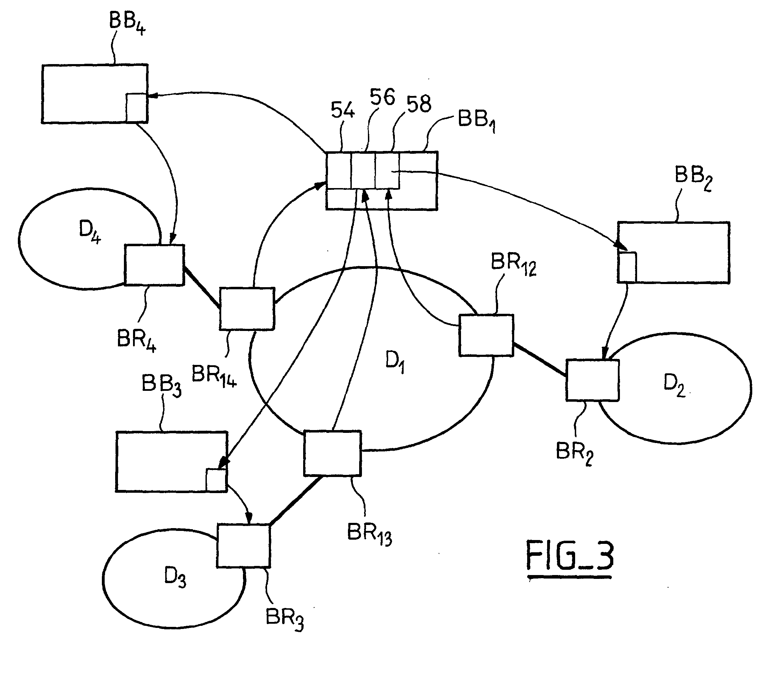

As shown on figure 3, a bandwidth broker may be able to control simultaneously several inter domain route exchange sessions. In this example, four domains D1, D2, D3 and D4 are present in the network. The bandwidth brokers BB₁, BB₂, BB₃ and BB₄ are associated with, respectively, domains D1, D2, D3 and D4.

As shown, the bandwidth broker BB₁ is controlling a route exchange session between domains D1 and D4, a route exchange session between domains D1 and D3 and a route exchange session between domains D1 and D2.

For the route exchange session from D1 to D4, the route exchange message starts from the egress border router BR₁₄ of domain D1 and is transmitted to the ingress border router BR₄ of domain D4 through, first, the bandwidth broker BB₁ and, second, the bandwidth broker BB4.

For the route exchange session from D1 to D3, the route exchange messages start from the egress border router BR₁₃ of domain 1 in order to reach the ingress border router BR3 of domain D3 and, for this purpose, are conveyed by bandwidth broker BB₁ and bandwidth broker BB₃.

In the same way, the route exchange session from domain D1 to domain D2 follows the path: BR₁₂-BB₁-BB₂-BR₂, where BR₁₂ is an egress border router of domain D1 and BR2 is an ingress border router of domain D2.

Of course, in bandwidth broker BB₁, the three route exchange sessions must be strictly separated. This separation is symbolised in figure 3 by three different fields, respectively 54, 56 and 58 in the block representing bandwidth broker BB₁.

In figure 3, the lines connecting BR₁₄ and BR₄, BR₁₃ and BR₃ and BR₁₂ and BR₂ represent the path for the data packets to be transmitted from D1 to D4, from D1 to D3 and from D1 to D2.

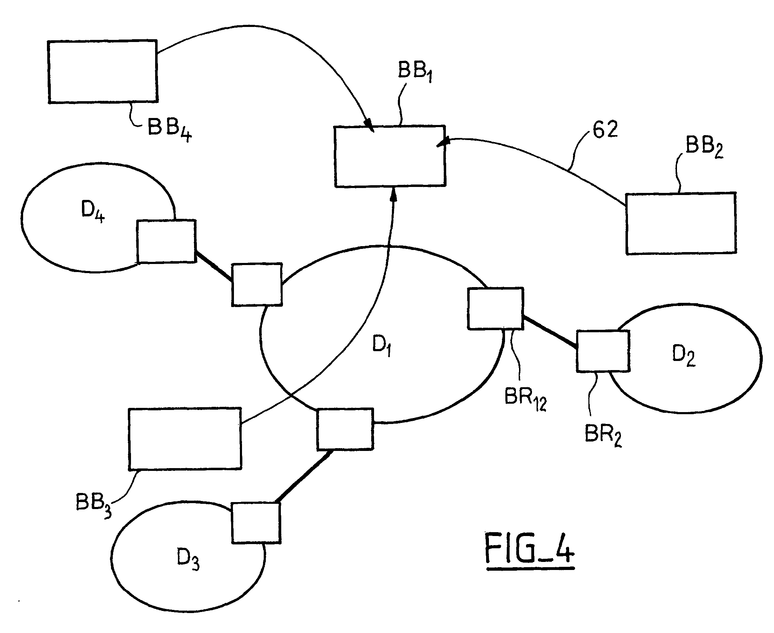

Figure 4 is a drawing representing the same network as the one represented on figure 3 but just after the route exchange sessions. In fact, just after the route exchange sessions, the bandwidth broker BB₁ receives resource request messages, i.e. bandwidth requests from bandwidth brokers, respectively BB2, BB3 and BB4. The bandwidth request 62 from BB2 to BB₁ is interpreted by bandwidth broker BB₁ as related to the previous route exchange session. In other words, the bandwidth request relates to packets to be transmitted between D1 and D2 through the border routers BR₁₂ and BR₂.

In fact, figure 4 shows the relationship between the routing plane (BGP messages) and the quality of service (QoS) reservation plane (the bandwidth flow request). When one bandwidth broker of a given domain receives a bandwidth request for a flow towards a specific destination (which may be located far away, for instance ten networks further), it needs to know at which border router of its domain the packets will arrive, and to which border router of its domain the packets will flow. In view of this information, the bandwidth broker knows to which peering network the packets will flow, and to which peering bandwidth broker it must send the bandwidth request. In fact, all this information is known because the bandwidth broker participates in the BGP routing and aligns its routing database with the actual routing information in the network.

The active interaction between routing signalling and bandwidth request signalling is as follows:

The start-situation is a stable network where certain flows traverse a chain of networks. These flows have been admitted by an admission control procedure before they were accepted on these networks. Once admitted, these flows profit from QoS because they have access to guaranteed reserved resources. These resources are reserved on the specific path that these flows follow through the concatenation of networks.

When, at a certain point in time, a better route is found to a certain destination network, the BGP routing protocol will distribute this new routing information to all the border routers of all the networks. If at a given network X, this new routing information means that 10.000 existing flows with a certain destination D will not be routed via network A any more but via network B, this means that, suddenly, the 10.000 existing flows would be routed via B instead of via A. Therefore, before admitting this routing change to be implemented in the routers, the bandwidth brokers must check that network B, and all subsequent downstream networks, has enough available bandwidth resources to accept all these flows. In order to check this availability, the banwidth broker of network X will send a bandwidth request signalling message to the bandwidth broker of network B requesting bandwidth for 10.000 flows. If the bandwidth broker of network B (and eventually of further downstream networks) accepts the bandwidth request and the flows, then the routing change is allowed to proceed and the bandwidth broker of network X will relay the routing change message to the border routers.

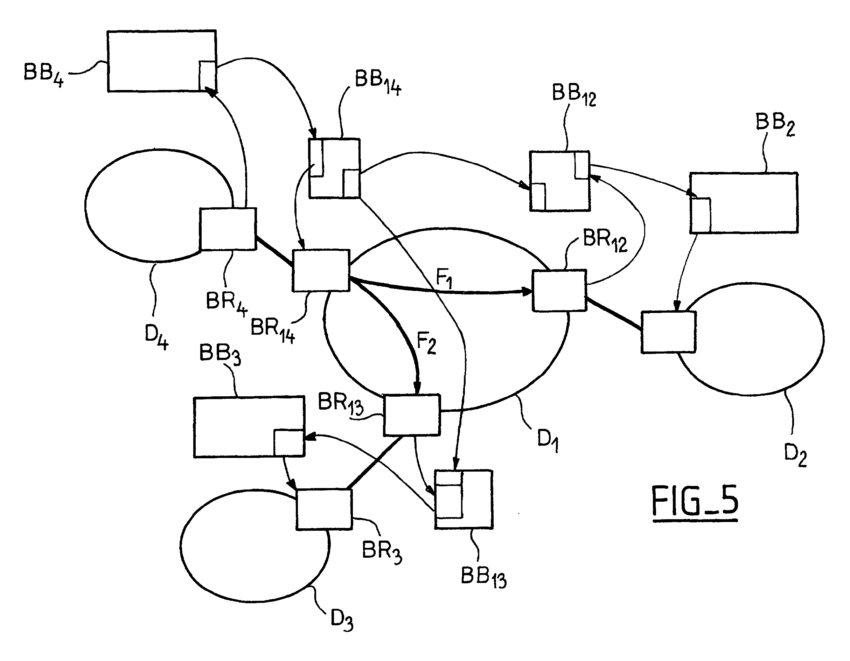

Figure 5 represents the same network as the one which has been described with figure 3 with the following modification: one bandwidth broker is associated with each border router.

As domain D1 has three border routers, BR₁₂, BR₁₃ and BR₁₄, to each of these border routers is associated a bandwidth broker, respectively BB₁₂, BB₁₃ and BB₁₄. In that case, the internal route exchange messages are also relayed by the bandwidth brokers. As shown, the external route exchange BR₄-BB₄-BB₁₄-BR₁₄ is relayed by the bandwidth broker BB₁₄ to the two other bandwidth brokers of domain D1, respectively BB₁₂ and BB₁₃; this transmission uses the BGP, to, or from, a border router and any signalling protocol is allowed between the bandwidth brokers. In the present case, this information is necessary because, as shown, data packets are transmitted inside the domain D1 from border router BR₁₄ to border router BR₁₂ (flow F1) and data packets are transmitted inside domain D1 from border router BR₁₄ to border router BR₁₃ (flow F2).

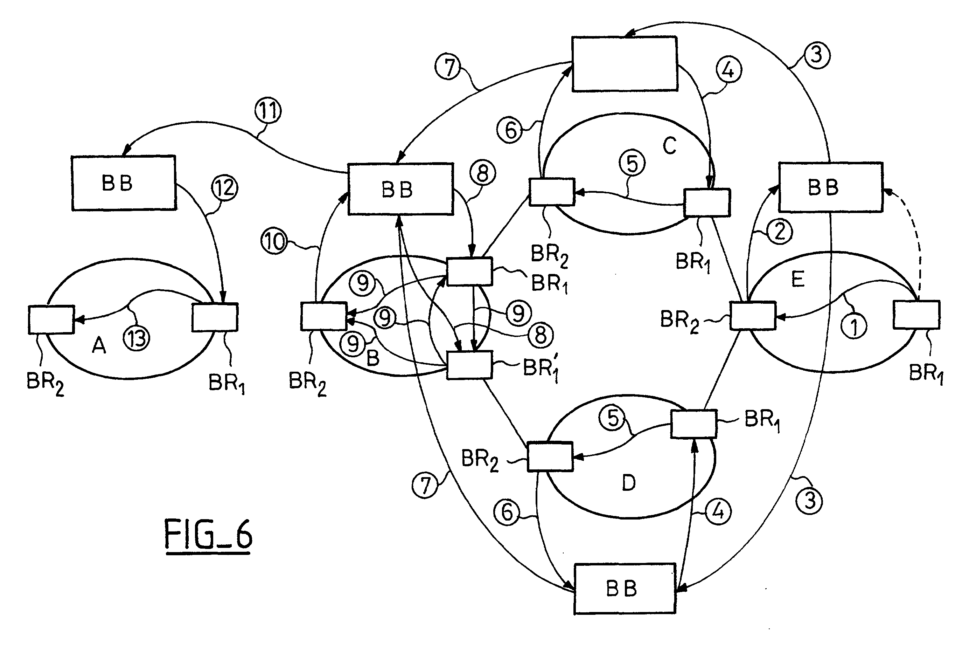

Figure 6 represents an example of route exchange scenario. In this figure, the numbers inside a circle and associated with an arrow correspond to the order, or succession, of route exchange sessions. The domains are referenced A, B, C, D and E. To each domain is associated a bandwidth broker referenced BB. Each domain has at least two border routers BR. Domain B has three border routers.

In this scenario, the destination is a border router BR of domain E.

Arrow number 1 represents the distribution of the new route from the destination BR towards the other border router in same domain E. This distribution is according to the I-BGP protocol.

It is to be pointed out here that the data packets flow in the opposite direction than the direction of the reachability information distribution, i.e. route exchange messages. With route exchange messages, reachability information is distributed to all the peering domains. The reachability information for a given border router means that a particular address or domain is reachable via this given border router.

Arrow number 2 represents the E-BGP distribution from the second border router BR of domain E to the associated bandwidth broker BB of this domain. The bandwidth brokers of domain E must distribute the route exchange to the bandwidth brokers of networks C and D because the announced reachability information must be reachable to all sources behind (i.e. upstream for data packets) networks C and D. So data packets towards the new destination in E will flow from BR1 of domain C to BR2 of domain E, or from BR1 of domain D to BR2 of domain E.

Arrow 5 correspond to the I-BGP distribution of the routes inside domains C and D.

Arrows 6, 7 and 8 represent the distribution of the routes from BR₂ of domain C to BR₁ of domain B through the respective bandwidth brokers of domains C and B. The route exchange from BR₂ of domain D to BR'₁ of domain B is also through the bandwidth brokers of respectively domains D and B. The corresponding arrows are also numbered 6, 7 and 8.

Arrows from BR₁ to BR'₁ and from BR'₁ to BR₁ and from BR'₁ to BR₂ and from BR₁ to BR₂ are labelled 9. They represent the I-BGP distribution of the routes inside domain B.

The policy decisions of the three routers in domain B will influence how packets will flow from network A to the new destination in network E: via network C or via network D. This decision to select one of the routes is made by the BGP policy rules. But, as the bandwidth broker of domain B does not receive directly information about this decision and as the bandwidth broker must, on the one hand, allocate resources (or do admission control) on the selected internal route and, on the other hand, be able to identify the next domain that packets will flow through, said BB of domain B must deduce the selection from the BGP policy rules of the border routers. In other words, each bandwidth broker, which does not receive directly information about the routes followed inside the associated domain, has information about the BGP policy rules in order to be able to compute the routes followed inside the associated domain, and this in view of allocating resources to the internal routes and/or performing admission control for new flows, and/or select the next network that packets will flow through on their way to the destination.

In another embodiment, the bandwidth broker BB passively listens to additional (I- or E-) BGP messages sent from the network's Edge and Border Routers. With this embodiment, a bandwidth broker can get information about every policy decision that has been taken by the border routers without knowing the precise policy rules.

Arrows 10, 11, 12 and 13 represent the distribution of routes from BR₂ of domain B to border router BR₁ of domain A and arrow 13 represents the I-BGP distribution of the routes inside domain A.

## Claims

1. A bandwidth broker for a domain of a telecommunication system comprising a plurality of domains, said bandwidth broker being associated with at least one border router of the corresponding domain in such a way that said bandwidth broker can obtain information about the routing tables of this border router in order to be able to allocate resources to data routes inside the domain and outside the domain,
**characterized in that** the bandwidth broker (34, BB₁) comprises
means for receiving from, or sending to, the associated border router (40, 50; BR₁₄, BR₁₃, BR₁₂) route exchange messages,
means for sending to, or receiving from, other bandwidth brokers (36; BB₂, BB₃, BB₄) same route exchange information in order that this bandwidth broker, together with at least one other bandwidth broker, relay route exchange messages between border routers
means to copy the routing or forwarding table of the associated border router, and means to synchronize the routing or forwarding table of said bandwidth broker with the routing or forwarding table of the associated border router
means for detecting, from the routing tables, changes in data routes inside the domain and outside the domain,
means for delaying route changes until resources have been allocated to the new route, and
means for blocking the route change if resources are not sufficiently available on the new route.

2. The bandwidth broker (BB1) according to claim 1, **characterized in that** said bandwidth broker comprises a plurality of inputs/outputs for connection to a plurality of border routers and a plurality of inputs/outputs for connection with other bandwidth brokers in order to be able to relay a plurality of route exchanges.

3. The bandwidth broker according to any of the previous claims, **characterized in that** said bandwidth broker is associated with a plurality of border routers of the corresponding domain.

4. The bandwidth broker according to any of the previous claims, **characterized in that** said bandwidth broker further comprises means for obtaining information about the route followed, from one border router to another border router inside the associated domain, by data of specific flows in order to be able to allocate resources to the selected route and/or perform admission control on the selected route and/or in order to identify the next network that the data will reach or go through.

5. The bandwidth broker according to claim 4, **characterized in that** said means for obtaining information about a selected route inside the associated domain apply the policy rules of the protocol of route determination inside the domain.

6. The bandwidth broker according to claim 4, **characterized in that** said means for obtaining information about a selected route inside the associated domain comprise means adapted to analyse the routing exchange information obtained from the border router after said border router has made a route selection.

7. The bandwidth broker according to any of the previous claims, **characterized in that** the exchange of information with the corresponding border router is according to the Border Gateway Protocol BGP.

8. A telecommunication system comprising a plurality of bandwidth brokers according to any of the previous claims.

9. The telecommunication system according to claim 8, **characterized in that** a same domain comprises a plurality of bandwidth brokers, each bandwidth broker of said plurality being associated with a distinct single border router or with a set of border routers of said domain, and all the bandwidth brokers of said plurality being connected to each other in order to exchange routing information from the complete domain and said single border router.

## Patentansprüche

1. Ein Bandbreitenmakler für eine Domäne eines Telekommunikationssystems, das eine Vielzahl von Domänen enthält, wobei der Bandbreitenmakler mindestens einem Grenz-Router der entsprechenden Domäne auf eine Weise zugeordnet ist, dass der Bandbreitenmakler Informationen über die Leitweglenkungs-Tabellen dieses Grenz-Routers erhalten kann, um in der Lage zu sein, Ressourcen an Daten-Routen innerhalb der Domäne und außerhalb der Domäne zu vergeben,
**dadurch gekennzeichnet, dass** der Bandbreitenmakler (34, BB₁) Mittel enthält, um vom zugeordneten Grenz-Router (40, 50; BR₁₄, BR₁₃, BR₁₂) Routen-Wechsel-Nachrichten zu empfangen und zu ihm zu senden,
Mittel, um zu anderen Bandbreitenmaklern (36; BB₂, BB₃, BB₄) dieselbe Routen-Wechsel-Information zu senden oder von ihnen zu empfangen, damit dieser Bandbreitenmakler, zusammen mit mindestens einem anderen Bandbreitenmakler Routen-Wechsel-Nachrichten zwischen Grenz-Routern weiterleiten kann,
Mittel, um die Leitweglenkungs- oder Weiterleitungs-Tabelle des zugeordneten Grenz-Routers zu kopieren, und Mittel, um die Leitweglenkungs- oder Weiterleitungs-Tabelle des Bandbreitenmaklers mit der Leitweglenkungs- oder Weiterleitungs-Tabelle des zugeordneten Grenz-Routers zu synchronisieren,
Mittel, um aus den Leitweglenkungs-Tabellen Änderungen in Daten-Routen innerhalb der Domäne und außerhalb der Domäne zu erkennen,
Mittel, um Routen-Änderungen zu verzögern, bis der neuen Route Ressourcen zugewiesen wurden, und
Mittel, um die Routen-Änderung zu blockieren, wenn auf der neuen Route keine ausreichenden Ressourcen zur Verfügung stehen.

2. Der Bandbreitenmakler (BB₁) gemäß Anspruch 1, **dadurch gekennzeichnet, dass** der Bandbreitenmakler eine Vielzahl von Eingängen/Ausgängen zum Anschluss einer Vielzahl von Grenz-Routern und eine Vielzahl von Eingängen/Ausgängen zur Verbindung mit anderen Bandbreitenmaklern enthält, um in der Lage zu sein, eine Vielzahl von Routen-Wechseln weiterzuleiten.

3. Der Bandbreitenmakler gemäß jedem der vorherigen Ansprüche, **dadurch gekennzeichnet, dass** der Bandbreitenmakler einer Vielzahl von Grenz-Routern der entsprechenden Domäne zugeordnet ist.

4. Der Bandbreitenmakler gemäß jedem der vorherigen Ansprüche, **dadurch gekennzeichnet, dass** der Bandbreitenmakler weiterhin Mittel enthält, um aus Daten von speziellen Flüssen Informationen über die Route zu erhalten, der von einem Grenz-Router zu einem anderen Grenz-Router innerhalb der zugeordneten Domäne gefolgt wird, um in der Lage zu sein, der gewählten Route Ressourcen zuzuweisen und/oder die Zugangskontrolle auf der gewählten Route durchzuführen und/oder um das nächste Netzwerk zu identifizieren, das die Daten erreichen oder durchlaufen werden.

5. Der Bandbreitenmakler gemäß Anspruch 4, **dadurch gekennzeichnet, dass** die Mittel zur Gewinnung von Informationen über eine gewählte Route innerhalb der zugeordneten Domäne die Strategie-Regeln des Protokolls der Routen-Bestimmung innerhalb der Domäne anwenden.

6. Der Bandbreitenmakler gemäß Anspruch 4, **dadurch gekennzeichnet, dass** die Mittel zur Gewinnung von Informationen über eine gewählte Route innerhalb der zugeordneten Domäne Mittel enthalten, die so angepasst sind, dass sie die Routen-Wechsel-Informationen analysieren, die vom Grenz-Router erhalten werden, nachdem der Grenz-Router eine Routen-Auswahl getroffen hat.

7. Der Bandbreitenmakler gemäß jedem der vorherigen Ansprüche, **dadurch gekennzeichnet, dass** der Austausch von Informationen mit dem entsprechenden Grenz-Router entsprechend dem Border Gateway Protocol BGP erfolgt.

8. Ein Telekommunikationssystem, das eine Vielzahl von Bandbreitenmaklern gemäß jedem der vorherigen Ansprüche enthält.

9. Das Telekommunikationssystem gemäß Anspruch 8, **dadurch gekennzeichnet, dass** eine selbe Domäne eine Vielzahl von Bandbreitenmaklern enthält, wobei jeder Bandbreitenmakler der Vielzahl einem getrennten einzelnen Grenz-Router oder einem Satz von Grenz-Routern der Domäne zugeordnet ist, und dass alle Bandbreitenmakler der Vielzahl miteinander verbunden sind, um Leitweglenkungs-Informationen von der kompletten Domäne und dem einzelnen Grenz-Router auszutauschen.

## Revendications

1. Gestionnaire de bande passante destiné à un domaine d'un système de télécommunications comprenant une pluralité de domaines, ledit gestionnaire de bande passante étant associé à au moins un routeur de frontière du domaine correspondant de telle sorte que ledit gestionnaire de bande passante puisse obtenir des informations relatives aux tables de routage de ce routeur de frontière de façon à pouvoir attribuer des ressources à des chemins de données à l'intérieur du domaine et à l'extérieur du domaine,
**caractérisé en ce que** le gestionnaire de bande passante (34, BB₁) comprend
des moyens permettant de recevoir de la part de ou d'envoyer vers le routeur de frontière associé (40, 50, BR₁₄, BR₁₃, BR₁₂), des messages d'échange de chemins,
des moyens permettant d'envoyer vers ou de recevoir de la part d'autres gestionnaires de bande passante (36 ; BB2, BB3, BB4), les mêmes informations d'échange de chemins afin que ce gestionnaire de bande passante, avec au moins un autre gestionnaire de bande passante, transmette les messages d'échange de chemins entre les routeurs de frontière,
des moyens permettant de copier la table de routage ou d'envoi du routeur de frontière associé, et des moyens permettant de synchroniser la table de routage ou d'envoi dudit gestionnaire de bande passante avec la table de routage ou d'envoi du routeur de frontière associé,
des moyens permettant de détecter, à partir des tables de routage, les changements de chemins de données à l'intérieur du domaine et à l'extérieur du domaine,
des moyens permettant de retarder les changements de chemins jusqu'à ce que les ressources aient été attribuées au nouveau chemin, et
des moyens permettant de bloquer le changement de chemin si les ressources ne sont pas suffisamment disponibles sur le nouveau chemin.

2. Gestionnaire de bande passante (BB1) selon la revendication 1, **caractérisé en ce que** ledit gestionnaire de bande passante comprend une pluralité d'entrées/de sorties destinées à la connexion à une pluralité de routeurs de frontière, et une pluralité d'entrées/de sorties destinées à la connexion avec d'autres gestionnaires de bande passante afin de pouvoir transmettre une pluralité d'échanges de chemins.

3. Gestionnaire de bande passante selon l'une quelconque des revendications précédentes, **caractérisé en ce que** ledit gestionnaire de bande passante est associé à une pluralité de routeurs de frontière du domaine correspondant.

4. Gestionnaire de bande passante selon l'une quelconque des revendications précédentes, **caractérisé en ce que** ledit gestionnaire de bande passante comprend en outre des moyens permettant d'obtenir des informations relatives au chemin suivi, entre un routeur de frontière et un autre routeur de frontière à l'intérieur du domaine associé, à l'aide des données de flux spécifiques, de façon à pouvoir attribuer des ressources au chemin sélectionné et/ou effectuer un contrôle d'admission sur le chemin sélectionné, et/ou identifier le réseau suivant que les données atteindront ou traverseront.

5. Gestionnaire de bande passante selon la revendication 4, **caractérisé en ce que** lesdits moyens permettant d'obtenir des informations relatives à un chemin sélectionné à l'intérieur du domaine associé appliquent les règles de politique du protocole de détermination de chemin à l'intérieur du domaine.

6. Gestionnaire de bande passante selon la revendication 4, **caractérisé en ce que** lesdits moyens permettant d'obtenir des informations relatives à un chemin sélectionné à l'intérieur du domaine associé comprennent des moyens adaptés pour analyser les informations d'échange de routage obtenues de la part du routeur de frontière après que ledit routeur de frontière ait effectué une sélection de chemin.

7. Gestionnaire de bande passante selon l'une quelconque des revendications précédentes, **caractérisé en ce que** l'échange d'informations avec le routeur de frontière correspondant est conforme au protocole de passerelle frontière BGP.

8. Système de télécommunications comprenant une pluralité de gestionnaires de bande passante selon l'une quelconque des revendications précédentes.

9. Système de télécommunications selon la revendication 8, **caractérisé en ce qu'**un même domaine comprend une pluralité de gestionnaires de bande passante, chaque gestionnaire de bande passante de ladite pluralité étant associé à un seul routeur de frontière distinct ou à un ensemble de routeurs de frontière dudit domaine, et tous les gestionnaires de bande passante de ladite pluralité étant reliés les uns aux autres afin d'échanger des informations de routage entre le domaine complet et ledit routeur de frontière seul.
